# EUROPÄISCHE PATENTSCHRIFT

(11) **EP 2 478 773 B1**
(45) Veröffentlichungstag und Bekanntmachung des Hinweises auf die Patenterteilung: **29.05.2013**
(21) Anmeldenummer: 11151949.2
(22) Anmeldetag: 25.01.2011
(51) Int. Cl.: A23G 1/20, A23G 9/28

(54) **Giessmaschinenventil**
Casting machine valve
Soupape de machine de coulée

(43) Veröffentlichungstag der Anmeldung: 25.07.2012
(73) Patentinhaber: Bühler AG, 9240 Uzwil (CH)
(72) Erfinder: Bauer, Bernhard, 9242, Oberuzwil (CH); Bühler, Leo, 8820, Wädenswil (CH)
(74) Vertreter: Hepp Wenger Ryffel AG

(56) Entgegenhaltungen:
- EP-A1- 1 350 477
- WO-A1-2009/032647
- DE-A1-102008 043 604

## Beschreibung

Die Erfindung bezieht sich auf ein Ventil, insbesondere für eine Giessmaschine, gemäss Anspruch 1, ein Ventilsystem gemäss Anspruch 4, insbesondere zum Einbau in eine Giessmaschine zum Giessen einer fliessfähigen Masse und eine Giessmaschine zum Giessen einer fliessfähigen Masse, insbesondere einer flüssigen Masse mit suspendierten Feststoff-Partikeln, wie z.B. Schokolade. Ausserdem bezieht sich die Erfindung auf eine Giessmaschine gemäss Anspruch 7, auf ein Verfahren zum Bilden eines Ventilsystems gemäss Anspruch 8, auf ein Verfahren zum Anpassen eines Giessmaschinenventilsystems gemäss Anspruch 9, auf einen Bausatz zum Bilden eines Giesmaschinenventilsystems gemäss Anspruch 10 und auf ein Verfahren zum Umrüsten einer Giessmaschine gemäss Anspruch 11.

Bekannte Giessmaschinen zum Giessen von Schokolade enthalten z.B. einen Massebehälter zur Aufnahme der fliessfähigen Masse, mindestens ein Ventil, das mit dem Massebehälter-Innenraum in Fluidverbindung steht, wobei das Ventil bei Vorhandensein eines Druckgefälles entlang seiner Ventil-Durchlassrichtung in einem geöffneten Zustand ist und bei Nicht-Vorhandensein dieses Druckgefälles entlang seiner Ventil-Durchlassrichtung in einem geschlossenen Zustand ist; sowie ein Druckerzeugungsmittel zum Erzeugen eines Druckgefälles entlang der Ventil-Durchlassrichtung des Ventils.

Fliessfähige Massen sind in diesem Zusammenhang Massen, die entweder schon aufgrund der Schwerkraft selbst fliessen und/oder die mittels einer Pumpe beförderbar sind.

Der Druck kann beispielsweise über eine Kolbenvorrichtung erzeugt werden, mit welcher portionierte Volumina der Masse in Dosierkammern gezogen oder gedrückt werden und aus diesen durch Düsen auf eine Unterlage oder in Hohlformen gepresst bzw. gegossen werden.

Bei einigen besonderen Bauformen derartiger Giessmaschinen ist die Ventilfunktion mit der Kolbenfunktion gekoppelt. Hierfür ist der Kolben z.B. als im Wesentlichen zylindrischer Hub- und/oder Dreh-Kolben ausgebildet, wobei durch eine Abfolge von Hub- und/oder Drehbewegungen des jeweiligen Kolbens in einer ersten Richtung und einer entgegengesetzten zweiten Richtung ein vollständiger Giesszyklus (Ansaugen und Ausstossen) durchgeführt werden kann.

Bei den meisten Anwendungen, in denen Schokoladenmasse gegossen wird, erfolgt das Giessen bei so hohen Temperaturen, dass die Schokoladenmasse insgesamt in einem recht dünnflüssigen Zustand vorliegt und es zu einem Nachfliessen an den Düsen kommen kann.

Es hat sich daher als vorteilhaft erwiesen, Düsenklappen zu verwenden, die an dem Ventilkörper angelenkt sind und einer elastischen Vorspannung ausgesetzt sind, welche die Ventilklappe gegen die Ventilöffnung drückt und diese abdichtet.

Es können auch Ventile mit elastischen Ventilklappen verwendet werden. Beispielsweise sind Ventile bekannt, deren Ventilklappen durch die Bereiche zwischen schlitzartigen Öffnungen in einem Ventilkörper geformt sind. Aus der W02009/032647 ist beispielsweise eine Ausgabedüse für einen Teigbeutel zur Abgabe von gekühlten Garnierungen auf Getränke oder Desserts bekannt, die elastische und flexible Düsenklappen aufweist, welche sich unter Druck öffnen lassen und schliessen, wenn der Druck weggenommen wird. Die Ventilanordnung weist gleichartige Ventilklappen auf, die jeweils einen Materialverstärkung besitzen, welcher der austretenden Masse ein Muster aufprägt.
In der DE 10 2008 043604 ist ein Ventil gezeigt, das gleichartige Ventilklappen aufweist, welche einen Hals und einen Klappenbereich aufweisen und im Halsbereich miteinander verbunden sind. Beim Schneiden der Schlitze kann das Ventilgefüge allerdings undefiniert beschädigt werden, wodurch die Funktion der Dichtflächen beeinträchtigt werden kann. Die Ränder der Schlitze neigen bei Beanspruchung zur Rissbildung, wodurch die Lebensdauer, im vorliegenden Fall die Anzahl der möglichen Schliesszyklen, reduziert wird.

Es hat sich ausserdem in der Praxis als schwierig erwiesen, die Ventilklappen in einem geschlitzten Ventilkörper mit einer definierten Vorspannung zu belegen.

Derartige Ventile erfüllen daher häufig nicht die Anforderungen im Hinblick auf eine präzise Dosierung, insbesondere bei hohen Taktfrequenzen und kleinen Dosiermengen.

Der Erfindung liegt die Aufgabe zugrunde, eine Ventilklappe für ein Ventil, ein Ventil, ein Ventilsystem sowie eine Giessmaschine zum Herstellen eines Verzehrproduktes aus einer giessbaren Masse, insbesondere aus einer Fettmasse wie z.B. Schokolade, bereitzustellen, bei der die geschilderten Nachteile und Unzulänglichkeiten beim Giessen vermieden oder zumindest verringert werden können. Gleichzeitig sollen das Giessmaschinenventil und die Giessmaschine einen einfachen und störungsunanfälligen Aufbau haben.

Diese Aufgabe wird gelöst durch ein Ventil gemäss Anspruch 1. Das Ventil, umfasst bevorzugt eine Ventilklappe und mindestens eine weitere, bevorzugt gleichartige, weiter bevorzugt separat gefertigte, Ventilklappe. Die Ventilklappe ist derart gestaltet, dass mit mindestens einem weiteren Ventilelement, ein Ventil bildbar ist. Bei dem Ventilelement kann es sich um ein gleichartiges und/oder ein komplementäres Element zu der Ventilklappe handeln. Während die Ventilklappe in der Regel ein zumindest teilweise bewegliches Ventilelement ist, kann das weitere Ventilelement ein statisches Element sein, das beispielsweise eine Anschlagfläche oder einen Sitz für die Ventilklappe bietet. Erfindungsgemäß handelt es sich aber um eine weitere, bevorzugt gleichartige, Ventilklappe.

Bevorzugt lassen sich mehrere Ventilklappen, insbesondere drei oder vier Ventilklappen zu einem Ventil zusammensetzen.

In dem Ventil sind die Ventilklappen, bzw. Ventilklappe und Ventilelement bevorzugt so angeordnet, dass sie bei einer Klappenstellung, bevorzugt in einer Ruheposition, in welcher kein Druck auf die Klappen ausgeübt wird, die Ventilöffnung sperren. Sobald ein Druck auf eine Klappe ausgeübt wird, verlässt die Klappe die Ruheposition und das Ventil bietet einen Durchlass. Lässt der Druck wieder nach, so schliessen die Ventilklappen wieder.

Die Ventilklappe ist bevorzugt so gestaltet, dass sich vier Ventilklappen zu einem Ventil mit bevorzugt kreisförmiger Einströmöffnung zusammensetzen lassen.

Einzeln vorliegende und/oder gefertigte Ventilklappen bieten die Möglichkeit der freien Gestaltung. Sie können beispielsweise in separaten Formen hergestellt werden, beispielsweise gegossen, gepresst, geschäumt oder vulkanisiert werden, sodass bei der Formgebung keine Rücksicht auf den Platzbedarf benachbarter Ventilelemente genommen werden muss.

Die Ventilklappen können auch zusammenhängend hergestellt werden. Sie können nach dem Formen getrennt werden und/oder derart zusammenhängend geformt sein, dass sie auch zusammenhängend zu einem Ventil fügbar sind. Erfindungsgemässe Ventilklappen sind mindestens im Bereich der Ventilöffnung unabhängig von dem Öffnungsbereich einer anderen Ventilklappe zu fertigen.

Die Ventilklappe des erfindungsgemässen Ventil besteht bevorzugt aus einem Elastomermaterial oder enthält es zumindest. Die Ventilklappe kann dann unter Druck ihre Form ändern und die Ventilöffnung dadurch freigeben. Für das Öffnen und Schliessen des Ventils ist daher keine Bewegung eines ganzen Ventilelements, bzw. der gesamten Ventilklappe notwendig, sondern nur eine Verformung. Der Vorgang des Öffnens und Schliessens kann entsprechend schnell erfolgen.

Eine Ventilklappe umfasst mindestens einen Klappenbereich. Der Klappenbereich definiert die Öffnung des Ventils.

Eine Ventilklappe umfasst bevorzugt ausserdem einen Halsbereich. Vorteilhafterweise ist der Halsbereich eher steif ausgestaltet und der Klappenbereich eher flexibel. Dazu kann die Materialdicke der Ventilklappe im Halsbereich grösser sein als im Klappenbereich. Der Halsbereich kann auch durch ein anderes Bauteil des Ventils verstärkt werden. Dazu kann der Halsbereich so gestaltet sein, dass er mit dem weiteren Bauteil zusammenwirkt, beispielsweise eine Kontaktfläche bietet. Der Halsbereich kann so ausgeführt sein, dass die Halsbereiche von Ventilklappen im montierten Zustand einen Flansch bilden, über den das Ventil mit einem Adapter verbindbar ist. Der Hals kann auch verkürzt ausgeführt sein, sodass er lediglich aus einem Verbindungselement zu dem Adapter besteht, beispielsweise der Halsbereich im montierten Zustand eine ringförmige Nut bildet.

In einer ersten erfindungsgemäßen Ausgestaltung der Erfindung ist die Ventilklappe, insbesondere im Klappenbereich, geometrisch überbestimmt.

Geometrische Überbestimmung heisst im vorliegenden Fall, dass die Ventilklappe, insbesondere der Klappenbereich, im unmontierten Zustand ein grösseres Segment der Querschnittsfläche des Ventils abdeckt als im montierten Zustand, bzw. bei einem Ventil aus gleichartigen Ventilelementen, dass die Summe der Flächen, welche die Ventilklappen, insbesondere die Klappenbereiche einzelner unmontierter Ventilklappen abdecken, grösser ist als die Querschnitts-, bzw. Öffnungsfläche des Ventils. Bei Ventilklappen mit Hals und Klappenbereich kann der Klappenbereich im unmontierten Zustand eine grössere Fläche abdecken als der Halsbereich umschliesst.

Dies kann dazu führen, dass sich die Klappenbereiche der Ventilklappen im montierten Zustand gegenseitig über- oder unterlappen. Sind die Kanten der Ventilklappen im Klappenbereich jedoch stumpf ausgeführt, so stossen die Klappen im montierten Zustand bei geschlossenem Ventil aneinander und üben gegenseitig einen Druck aus. Die Kanten sind bevorzugt so ausgebildet, dass sie mit der Kante einer benachbart angeordneten Ventilklappe einen dichtenden Verschluss bilden.

Bevorzugt ist der Klappenbereich so ausgelegt, dass der Klappenbereich im unmontierten Zustand eine Fläche bedeckt, durch welche die durch den Halsbereich vorgegebene zentrale Achse des Ventils läuft. Bei einem Ventil, das aus gleichartigen Ventilklappen gebildet wird, stossen die Ventilklappen im geschlossenen Zustand an dieser Achse aneinander. Die zu einem Ventilverschluss zusammengesetzten Ventilklappen weisen im montierten Zustand bei geschlossenem Ventil eine Vorspannung auf.

Die Vorspannung sorgt für ein definiertes Öffnen und/oder Schliessen der Ventilklappen und dafür, dass Dichtflächen an den Kanten der Ventilklappen aufeinander gepresst werden. Somit wird auch für dünnflüssige oder sogar gasförmige Massen ein dichter Ventilverschluss erreicht.

In einer weiteren erfindungsgemäßen Ausführung der Erfindung weist die Ventilklappe mindestens eine Schneidlippe auf, bevorzugt im Klappenbereich, die im montierten Zustand bei geschlossenem Ventil ein benachbartes Ventilelement, bevorzugt eine weitere Ventilklappe, über- oder unterlappt.

Die Schneidlippe ist vorzugsweise so gestaltet, dass sich die Materialstärke mit wachsender Entfernung vom Klappenbereich der Ventilklappe, also nach aussen, verringert. Dies sorgt dafür, dass die Schneidlippe eine Schneidkante bildet, mit welcher der Materialstrom der aus dem Ventil laufenden Masse definiert unterbrochen wird, wenn die Ventilklappen schliessen.

Ausserdem gleitet die Schneidlippe im montierten Zustand der Ventilklappe bei einer Bewegung der Klappenbereiche leichter über oder unter das benachbarte Ventilelement. Das dichtende Schliessen der Ventilklappen wird durch die Schneidlippen somit nicht behindert.

Mit Hilfe einer Schneidlippe wird der Strom des zu giessenden Materials während des Schliessens und noch vor einem endgültigen Verschluss der Ventilklappen abgeschnitten, wodurch ein Fadenabriss bewirkt wird.

Es kann zunächst eine Ventilklappe gefertigt werden, beispielsweise in einem Spritzgussverfahren, und anschliessend eine Schneidlippe angebracht werden, beispielsweise angeklebt werden. Die Schneidlippe und die Ventilklappe sind jedoch bevorzugt einteilig ausgeführt, die Ventilklappe wird also direkt mit Schneidlippe gefertigt.

In einer weiteren bevorzugten Ausführungsform der Erfindung ist die Ventilklappe an den Randbereichen so ausgeführt, dass sie in montiertem Zustand dichtend an benachbarte Ventilklappen passt, insbesondere im Halsbereich formschlüssig an und/oder in benachbarte Ventilklappen passt.

Die Ventilklappe kann dazu Fortsätze und/oder Öffnungen aufweisen, die im montierten Zustand in entsprechende Fortsätze und/oder Öffnungen benachbarter Ventilelemente, insbesondere weiterer Ventilklappen, greifen. Ein dichtendes Aneinanderpassen der Ventilklappen, insbesondere im Halsbereich, verhindert, dass zu giessende Masse im Randbereich der Ventilklappen austritt und sorgt dafür, dass die Ventilklappen lediglich im Klappenbereich öffnen.

In einer weiteren vorteilhaften Ausführung der Erfindung ist die Ventilklappe so ausgeführt, dass die Biegekraft beim Öffnen der Klappen konstant ist und/oder die Ventilklappe unter Druck auf der gesamten Breite öffnet. Dazu sind bevorzugt die nach aussen weisenden Kanten der Ventilklappe, insbesondere im Klappenbereich, verstärkt oder der Klappenbereich ist mittig verstärkt. Die Verstärkung erfolgt bevorzugt durch eine Vergrösserung der Materialstärke, zum Beispiel durch eine Rippe, die zum Beispiel an der Aussenseite des Klappenbereichs der Ventilklappe angeordnet ist.

Die Ventilklappe öffnet dann unter Druck gleichmässig und reversibel, das heisst, die Öffnungsfläche des Ventils wächst stetig und gleichmässig, das heisst, ohne plötzliche Sprünge. Bei einer Verringerung des Drucks kehrt die Ventilklappe wieder in ihre Ausgangsposition zurück und im montierten Zustand schliesst die Ventilklappe das Ventil dann auch wieder spontan, also ohne das Anlegen einer äusseren Kraft.

Ausserdem sollen in einer bevorzugten Variante die Klappenbereiche beim Öffnen und Schliessen eine derartige Bewegung ausführen, dass die das Ventil durchströmende Masse in bestimmter Weise geführt wird. Die Masse soll beispielsweise nicht an die Aussenseite des Ventils gelangen. Dies könnte unter Umständen zu einer Verschmutzung des Ventils, zu einem Nachtropfen und/oder zu Undichtigkeiten führen.

Die Ventilklappe kann so ausgeführt sein, dass die ausströmende Masse als glatter Strahl aus der Düse gelangt.

Die Ventilklappe kann jedoch auch derart ausgeführt sein, dass eine Masse, welche die montierte Ventilklappe durchströmt, einen Drall erhält. Beispielweise kann die Klappe beim Öffnen und Schliessen eine Drehbewegung und/oder Verwindung ausführen, so dass es zu einer Torsion der ausströmenden Masse kommt. Dies kann durch das Vorliegen unterschiedlicher Materialstärke und/oder unterschiedlicher Materialeigenschaften (z.B. Elastizitätsmodul) innerhalb der Ventilklappe bewirkt werden.

Insbesondere können die Kanten der Ventilklappe derart gestaltet sein und/oder der Verlauf der Ventilklappenkontur kann derart gestaltet ist, dass die ausströmende Masse beim Durchströmen des Ventils einen Drall erhält. Dazu können zum Beispiel die Kanten und/oder die Innenseiten der Ventilklappen (z.B. spiral- oder schraubenförmig angeordnete Rillen oder Führungsblätter) derart geformt sein, dass die Masse beim Durchströmen in eine Rotation gerät.

Insbesondere für hochviskosere Massen kann es günstig sein, dass diese einen Drall erhalten, damit sie sich nach dem Auftreffen in der Form schnell und gleichmässig in der Form verteilen.

Zu einen gleichmässigen Öffnen und Schliessen der Ventilklappen trägt auch der Verlauf der Ventilklappenkontur bei. Bevorzugt ist der Verlauf, insbesondere im Klappenbereich, so gestaltet, dass die Biegekraft beim Öffnen der Klappen konstant ist. Ein plötzlicher Flip des Klappenbereichs, der unter Umständen dazu führen könnte, dass die Ventilklappen ohne einen Gegendruck nicht mehr schliessen, soll verhindert werden.

Der Ventilverschluss in einem erfindungsgemäßen Ventil wird durch Ventilelemente gebildet, die zumindest im Klappenbereich unabhängig voneinander gefertigt sind und eine Geometrie aufweisen, die einen zuverlässigen Ventilschluss bewirkt.

Die einzelnen Ventilklappen können gleichzeitig und/oder zusammenhängend gefertigt werden. Zur Bildung des Ventils werden bevorzugt separate Ventilelemente benutzt, die bei der Montage in eine räumliche Beziehung zueinander gebracht und fixiert werden. Die Fixierung kann lösbar oder dauerhaft sein.

Das Arrangieren separater Ventilelemente erlaubt grössere Freiheiten in der Anordnung. Die Ventilelemente, insbesondere Ventilklappen können beispielsweise unter- oder überlappen und/oder in eine zueinander vorgespannte Lage gebracht werden.

Die Aufgabe wird ausserdem gelöst durch ein Ventilsystem mit einem Ventil, wie oben beschrieben, das einen Adapter und ein Befestigungselement aufweist. Der Adapter dient zur Verbindung zwischen der Giessmaschine und dem Giessmaschinenventil und weist ein Verbindungselement zum Verbinden auf, beispielsweise ein Gewinde.

Das Befestigungselement dient zum Fixieren der Ventilelemente aneinander und/oder an dem Adapter. Bei dem Befestigungselement kann es sich um eine Klebeverbindung, eine Schrumpf- oder um eine Schweissverbindung handeln. Bevorzugt handelt es sich bei dem Befestigungselement um eine Überwurfmutter, ein Klickverbindungs-, ein Rast- oder ein Klemmelement.

Das Ventilsystem kann so ausgeführt sein, dass es sich nur im zusammengefügten Zustand montieren oder demontieren lässt. Dazu kann beispielsweise nur am Adapter oder nur am Befestigungselement ein Angriffbereich für ein entsprechendes Werkzeug vorgesehen sein, mit Hilfe dessen das zusammengefügte Ventilsystem ordnungsgemäss, also ohne das Risiko auf Beschädigung, appliziert, entnommen, befestigt oder gelöst werden kann.

Das Befestigungselement und der Adapter können mit einer Verdrehsicherung ausgestattet sein, beispielsweise mit im montierten Zustand ineinander greifenden Nuten und Rippen, die bevorzugt in Axial- oder Durchlassrichtung des Ventils verlaufen. Diese verhindern, dass zwischen dem Befestigungselement und er dem Adapter eine Drehbewegung stattfindet, sobald das Befestigungselement auf dem Adapter angebracht ist. Auf das Befestigungselement aufgebrachte Drehkräfte lassen sich somit auf den Adapter übertragen, ohne dass eine Torsion der Ventilelemente stattfindet.

Ein zusammengefügtes Ventilsystem kann also beispielsweise mittels eines an dem Befestigungselement angreifenden Werkzeuges an einer Giessmaschine aufgeschraubt werden.

In einer vorteilhaften Ausführungsform werden die Ventilklappen durch einen Zwischenring, insbesondere einen Gleitring, zusammengehalten, der insbesondere zwischen den Ventilklappen und dem Befestigungselement angeordnet ist. Der Zwischenring erhöht die Stabilität des Ventilaufbaus und erleichtert die Montage. Der Zwischenring verbessert ausserdem die Dichtung, sodass vor allem im Halsbereich der Ventilklappen kein Material aus- oder eintritt. Der Zwischenring kann mit einer zusätzlichen Dichtung ausgestattet sein und/oder mindestens eine Nut zur Aufnahme mindestens eines Dichtrings aufweisen.

Der Ring besteht bevorzugt aus einem Material, bei welchem zwischen dem Befestigungselement und dem Ring wenig Gleitreibung entsteht. Beim Anbringen des Befestigungselements werden daher keine Kräfte auf den Gleitring und damit auf die Ventilklappen übertragen und es erfolgt insbesondere keine Torsion der Ventilklappen. Die Anordnung der Ventilklappen ändert sich also bei der Fixierung nicht.

Der Zwischenring kann so ausgeführt sein, dass er die Vorspannung zwischen den Ventilelementen optimiert. Er kann beispielsweise eine konische Innenfläche aufweisen, die sich gegen den Klappenbereich der Ventilklappen hin verengt, einen konzentrischen Druck auf die Klappen ausübt und somit den Anpressdruck der Klappenkanten aufeinander erhöht.

Je weiter der Zwischenring auf die Ventilklappen geschoben ist, desto enger ist der Zwischenring im Klappenbereich und desto höher ist der Effekt auf die Vorspannung. Diese kann also erhöht werden, indem der Zwischenring weiter auf die Ventilklappen geschoben wird.

Die Vorspannung ist somit über den Sitz des Zwischenrings einstellbar.

Der Zwischenring, bzw. Gleitring, kann als Stützring ausgebildet sein, der die Ventilklappen umschliesst und die Bewegung der Klappenbereiche beschränkt und beispielsweise ein Überklappen verhindert.

Der Zwischenring kann einteilig mit dem Befestigungselement ausgebildet sein, beispielsweise indem der Befestigungselement und Zwischenring in einem Mehrkomponenten-Gussverfahren gefertigt werden.

Der Adapter kann zumindest einen Sockel aus wärmeleitfähigem Material aufweisen, um welchen die Ventilklappen, insbesondere im Halsbereich, angeordnet werden.

Das zu giessende Material kann somit bis kurz vor dem Austritt aus dem Ventil temperiert werden. Es behält damit eine gleichmässige und gleich bleibende Konsistenz sowie konstante Fliesseigenschaften.

Der Adapter hat bevorzugt eine zylindrische zentrale Öffnung, die in einem zylindrischen Sockel ausläuft. Die Ventilklappen haben Halsbereiche mit Anlageflächen in Form von Zylindersegmenten, sodass sich die Ventilklappen um und/oder in dem Sockel anordnen lassen und an diesem anliegen.

Der Adapter kann mindestens eine Sitzfläche zur Aufnahme eines Dichtrings aufweisen.

Der Adapter kann unlösbar an der Giessmaschine befestigt sein, beispielsweise kann er angeschweisst oder einteilig mit einem Giessmaschinenteil, wie z.B. einem Giesskolben, gefertigt sein. Bevorzugt ist er jedoch auswechselbar befestigbar. Dazu umfass der Adapter an dem im montierten Zustand der Giessmaschine zugewandten Ende ein Fixierelement auf, beispielsweise einen Flansch oder ein Schnappelement.

Der Adapter weist bevorzugt ein erstes Gewinde zum Befestigen an der Giessmaschine oder einem der Giessmaschine zugeordneten Bauteil auf.

In einer weiteren bevorzugten Ausführung weist der Adapter ein zweites Gewinde zum Befestigen des Befestigungselements auf. Alternativ kann der Adapter andere Fixierelemente aufweisen, die als Gegenstück und/oder zum Eingriff für Rast- oder Klemmelemente des Befestigungselements wirken können. Der Adapter kann auch eine Fläche aufweisen für eine Klebe- oder Schweissverbindung mit dem Befestigungselement.

In einer weiteren bevorzugten Ausführung weist der Adapter ein erstes Gewinde zum Befestigen an der Giessmaschine oder einem der Giessmaschine zugeordneten Bauteil und ein zweites Gewinde zum Befestigen des Befestigungselements auf.

Der Adapter ist bevorzugt aus Aluminium gefertigt.

Die Aufgabe wird weiterhin gelöst durch eine Giessmaschine mit einem Ventil wie oben beschrieben.

Die erfindungsgemässen Ventilsysteme eignen sich besonders zur Verwendung in einer Dosiervorrichtung mit veränderlichem Volumen, die mindestens ein Einlass- und ein Auslassventil aufweist. Die verlässlich schliessenden und öffnenden Ventile erhöhen die Dosiergenauigkeit.

Die Aufgabe wird weiterhin gelöst durch ein Verfahren zum Bilden eines Ventilsystems wie oben beschrieben, wobei das Verfahren die folgenden Schritte umfasst:
(i) Anordnen mindestens eines Ventils wie oben beschrieben an einem Adapter, insbesondere einer Ventilklappe wie oben beschrieben und eines weiteren Ventilelements, insbesondere mindestens einer weiteren, bevorzugt gleichartigen, Ventilklappe an einem Adapter; (ii) Fixieren der Anordnung mit einem Befestigungselement.

Als weiterer Verfahrensschritt kann vor dem Fixieren der Anordnung mit einem Befestigungselement ein Zwischenring auf die Ventilklappen geschoben werden.

Alternativ können zunächst das Befestigungselement und der Zwischenring miteinander verbunden werden, sodass sie als Einheit fixiert werden können.

Die Ventilklappen können auch zunächst mit dem Zwischenring und dann erst mit dem Befestigungselement verbunden werden. Die Befestigungselement und Ventilelemente, bzw. Ventilklappen, bilden dann eine Einheit, die an dem Adapter fixiert, beispielsweise auf den Adapter geschraubt, werden kann.

Die Aufgabe wird weiterhin gelöst durch ein Verfahren zum Anpassen eines Ventils in eine zu giessende Masse, umfassend die Schritte (i) Auswahl geeigneter Ventilklappen, und (ii) Bilden eines Ventils oder Ventilsystems wie oben beschrieben.

Als weitere Verfahrensschritte können zuvor ein Lösen des Befestigungselements und/oder ein Entfernen der Ventilklappen vorgenommen werden.

Mit dem erfindungsgemässen Verfahren können einerseits verbrauchte Ventile aufgearbeitet werden und andererseits Ventile an eine neue Verwendung einer Giessmaschine angepasst werden. Eine Giessmaschine kann zum Beispiel für eine Masse mit anderen Fliesseigenschaften verwendet werden, sodass Ventile mit anderen Schliesseigenschaften benötigt werden, deren Klappen beispielsweise leichter beweglich oder schwergängiger sind oder die einem höheren statischen Gewichtsdruck standhalten, bevor die Vorspannung der Klappen überwunden wird und die Klappen öffnen.

Die Aufgabe wird weiterhin gelöst durch einen Bausatz zum Bilden eines Ventilsystems umfassend einen Adapter, ein Befestigungselement und eine Vielzahl von unterschiedlichen Ventilklappen wie oben beschrieben, so dass aus den Ventilklappen eine Ventilgruppe auswählbar ist, die ein Ventil bildet, das passend zu einer vorgegebenen zu giessenden Masse ist.

Giessmaschinen für verschiedene Anwendungen können somit mit prinzipiell gleichartigen Giessmaschinenventilen ausgestattet sein. Unterschiedliche Schliess- bzw. Durchlasseigenschaften der Ventile können durch eine Auswahl geeigneter Ventilklappen erreicht werden.

Die Aufgabe wird weiterhin gelöst durch ein Verfahren zum Umrüsten einer Giessmaschine umfassend die Schritte: (i) Entfernen der alten Giessmaschinenventile; (ii) Anbringen von Giessmaschinenventilen wie oben beschrieben.

Die Aufgabe wird weiterhin gelöst durch ein Ventilsystem, wie oben beschrieben, wobei das Ventilsystem einen Adapter und ein Befestigungselement aufweist. Der Adapter und das Befestigungselement dienen zur Aufnahme eines Ventils, insbesondere wie oben beschrieben. Erfindungsgemäss ist an dem Adapter und/oder an dem Befestigungselement eine Verdrehsicherung vorgesehen ist, derart, dass das Befestigungselement nicht mehr gegenüber dem Adapter verdreht werden kann, sobald das Befestigungselement an dem Adapter montiert ist.

Bei dem Befestigungselement handelt es sich insbesondere um eine Überwurfmutter, ein Klemm- oder Clipelement, die Verderehsicherung beispielsweise durch eine Nut-Feder Verbindung realisiert sein kann. Befestigungselement und Adapter können auch so verbunden werden, dass ein gegenseitiges Bewegen und ein zerstörungsfreies Lösen nicht mehr möglich ist, beispielsweise durch Kleben oder Verschweissen. Eine Verdrehsicherung ist dann automatisch gegeben.

Bevorzugt weist das Befestigungselement ein Aussenprofil auf, das eine Angriffsfläche für ein Montagewerkzeug bietet.

Denkbar ist weiterhin ein Bausatz zum Montieren von Ventilsysteme wie oben beschrieben, umfassend mindestens einen Adapter, mindestens ein Befestigungselement und ein Werkzeug. Das Werkzeug und die Aussenfläche des Befestigungselements sind derart gestaltet, dass das Werkzeug mit der Oberfläche des Befestigungselements zusammenwirken kann, und das zusammengefügte Ventilsystem mit Hilfe des Werkzeugs greifbar, montierbar, lösbar und/oder fixierbar ist.

Die Aufgabe wird weiterhin gelöst durch ein Verfahren zum Bilden und Anbringen von Ventilsystemen, wie oben beschrieben, umfassend die Schritte: Zusammenfügen von Adapter und Befestigungselement, Befestigen des zusammengefügten Ventilsystems mit Hilfe eines Werkzeuges, das mit der Aussenfläche des Befestigungselement und bevorzugt nicht mit dem Adapter zusammenwirkt.

Die Erfindung ist im Folgenden in Ausführungsbeispielen anhand von Zeichnungen näher erläutert. Es zeigen:
- Figur 1: ein erstes Beispiel für eine erfindungsgemässe Ventilklappe für ein Giessmaschinenventil in einer ersten perspektivischen Ansicht;
- Figur 2: die Ventilklappe gemäß Figur 1 in einer zweiten perspektivischen Ansicht;
- Figur 3: die Ventilklappe gemäß Figur 1 in einem Axialschnitt;
- Figur 4: die Ventilklappe gemäß Figur 1 in einer Draufsicht;
- Figur 5: eine schematische Darstellung der Bestandteile eines ersten Giessmaschinenventilsystems in perspektivischer Ansicht;
- Figur 6: eine schematische Darstellung eines erfindungsgemässen Ventils mit zusammenhängenden Ventilklappen;
- Figur 7: eine schematische Darstellung von Ventilelementen eines zweiten Beispiels für ein erfindungsgemässes Ventil in perspektivischer Ansicht;
- Figur 8: eine schematische Darstellung der Bestandteile eines zweiten Beispiels für ein Giessmaschinenventilsystem in perspektivischer Ansicht;
- Figur 9: eine schematische Darstellung der Bestandteile eines weiteren Beispiels für ein Giessmaschinenventilsystem in perspektivischer Ansicht;
- Figur 10: ein Werkzeug und ein Befestigungselement in perspektivischer Darstellung.

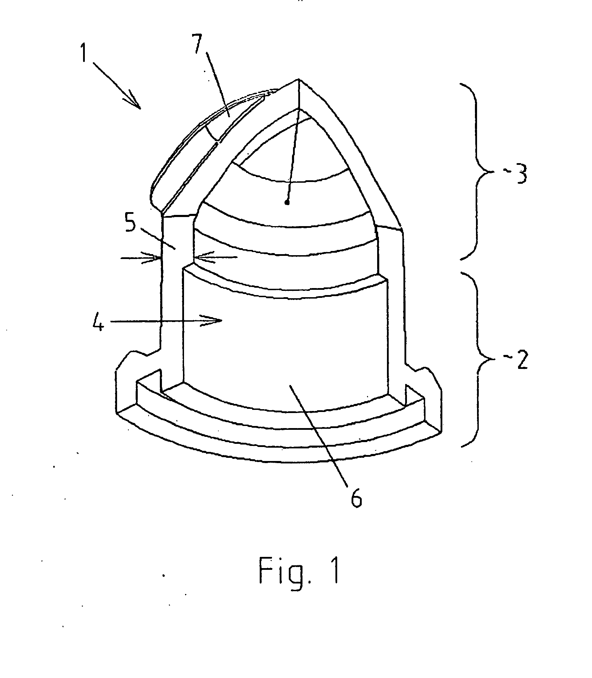

Figur 1 zeigt eine Ventilklappe 1 für ein erfindungsgemäßes Ventil in einer ersten perspektivischen Ansicht von innen.

Die Ventilklappe 1 besitzt einen Halsbereich 2 und einen Klappenbereich 3.

Im Halsbereich 2 ist weist die Ventilklappe 1 eine Ausnehmung 4 auf, in welcher die Materialstärke 5 geringer ist. Die Ausnehmung 4 bietet eine Anlagefläche 6 zum Anlegen der Ventilklappe 1 an einen in der Figur nicht gezeigten Sockel eines Adapters.

In Klappenbereich 3 besitzt die Ventilklappe 1 auf einer Seite eine Schneidlippe 7.

Im montierten Zustand überlappt diese Schneidlippe 7 den Klappenbereich einer nicht gezeigten benachbarten Ventilklappe.

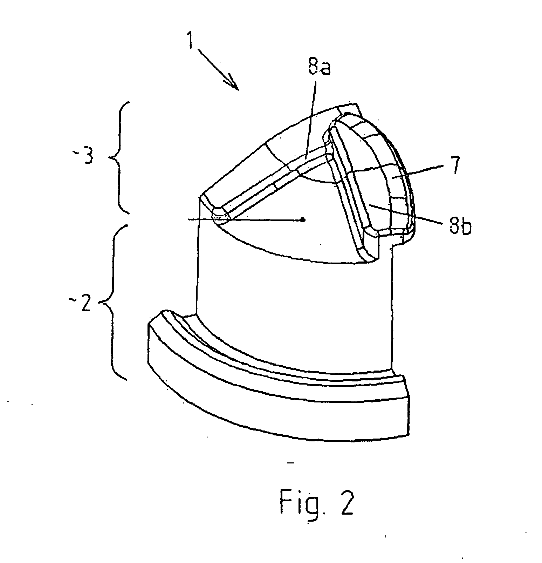

Figur 2 zeigt die Ventilklappe 1 in einer zweiten perspektivischen Ansicht von aussen.

Die Kanten 8a, 8b der Ventilklappe 1 im Klappenbereich 3 sind verstärkt, also mit einer grösseren Materialstärke ausgeführt. Die Verstärkung ist so ausgelegt, dass die mit einer Schneidlippe 7 versehene Ventilklappe 1 sich beim Öffnen unter Druck nicht verdreht. Ohne den Ausgleich durch die Verstärkung hat die Seite der Ventilklappe, auf welcher die Schneidlippe 7 angebracht ist, eine höhere Steifigkeit als die andere Seite, auf der keine Schneidlippe vorgesehen ist. Beim Öffnen unter einem gleichmässigen Innendruck würden die beiden Kanten daher unterschiedlich reagieren, was zu einem unerwünscht starken Verdrehen der Klappe führen würde.

Die Kanten lassen sich derart ausgeführt, dass die zu dosierende Masse beim Durchströmen einen vorgewählten Drall erhält. Soll der Strahl der durchströmenden Masse möglichst glatt sein, sind die Kanten derart ausgeführt, dass ein Verdrehen der Klappen beim Öffnen und Schliessen verhindert wird. Soll der Strahl eine Torsion erfahren, so sind die Klappen derart gestaltet, dass die geöffneten Klappen zu einem um die Ausflussachse rotierenden Ausfluss führen.

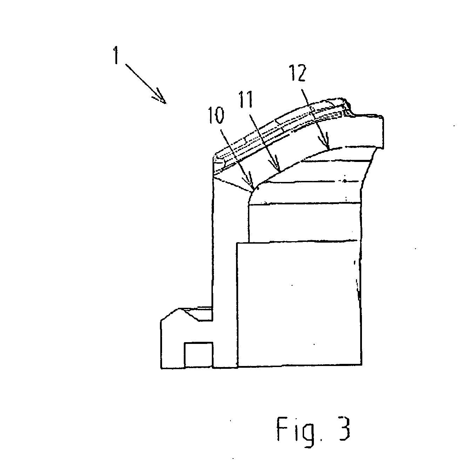

Figur 3 zeigt die Ventilklappe 1 in einem Axialschnitt. Der Verlauf der Ventilklappenkontur 9, insbesondere im Klappenbereich 3, ist so gestaltet, dass die Biegekraft bei zunehmender Öffnung des Ventils konstant ist. Damit wird der Öffnungsbereich beim Öffnen der montierten Ventilklappen unter Druck gleichmässig grösser und es erfolgt kein plötzlicher Sprung des Öffnungsbereichs, beispielsweise durch einen Flip der Ventilklappen.

Im vorliegenden Ausführungsbeispiel geht die Ventilklappenkontur von einem mit einem ersten Radius R1 gekrümmten Bereich 10 über einen im Wesentlichen geraden Bereich 11 (Radius gegen unendlich oder zumindest sehr gross) in einen mit einem zweiten Radius R2 gekrümmten Bereich 12 über, wobei der zweite Radius R2 grösser als der erste Radius R1 ist.

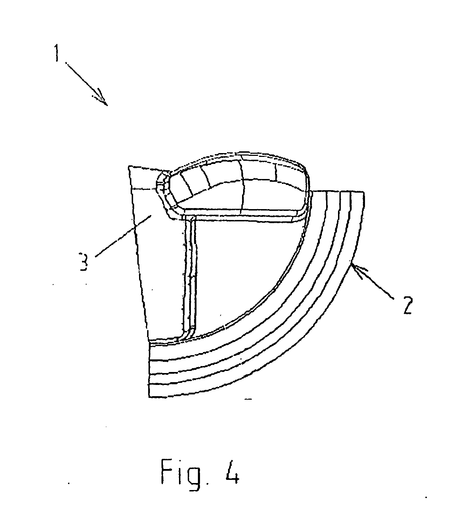

Figur 4 zeigt die Ventilklappe 1 in Draufsicht.

Die Ventilklappe 1 ist geometrisch überbestimmt. Im vorliegenden Fall deckt der Klappenbereich 3 ein grösseres Segment ab, als der Halsbereich 2 einschliesst.

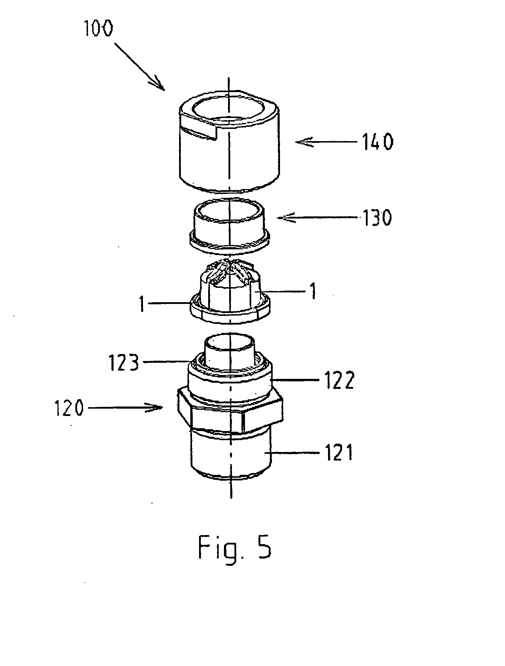

Figur 5 zeigt eine schematische Darstellung der Bestandteile eines Ventilsystems 110 in perspektivischer Ansicht.

Das Ventilsystem 110 umfasst einen Adapter 120, ein Ventil 100 mit bestehend aus vier Ventilklappen 1, einen Zwischenring 130 und ein Befestigungselement 140 in Form einer Überwurfmutter.

Der Adapter 120 besitzt ein Gewinde zum Befestigen des Adapters 120 an einem nicht gezeigten, der Giessmaschine zugeordneten Bauteil, und ein zweites Gewinde 122 zur Verbindung mit dem Befestigungselement 140.

Der Adapter 120 umfasst ausserdem einen zylindrischen Sockel 123, um den herum die Ventilklappen 1 angeordnet werden. Der gesamte Adapter 120 ist aus wärmeleitfähigem Material, hier Aluminium gefertigt. Die zu giessende Masse kann somit noch im Ventil 100 temperiert werden. Der Adapter kann alternativ aus PE gefertigt werden.

Der Öffnungsdurchmesser beträgt je nach der Fliesscharakteristik der Masse und den Abständen der Ventile in einer Giessmaschine mit einer Vielzahl von Ventilen 5-60 mm, vorzugsweise 5-15 mm, vorzugsweise in etwa 10 mm.

Die Ventilklappen sind beispielsweise aus einem Thermoplast oder Duroplast oder aus NBR gefertigt. Alternativ kann je nach Anwendungsbereich auch eine innen liegende Verstärkung vorgesehen sein, beispielsweise ein umgossenes Metallelement oder ein vulkanisiertes Federstahlelement.

Der Zwischenring ist als Gleitring beispielsweise aus POM oder PTFE gefertigt.

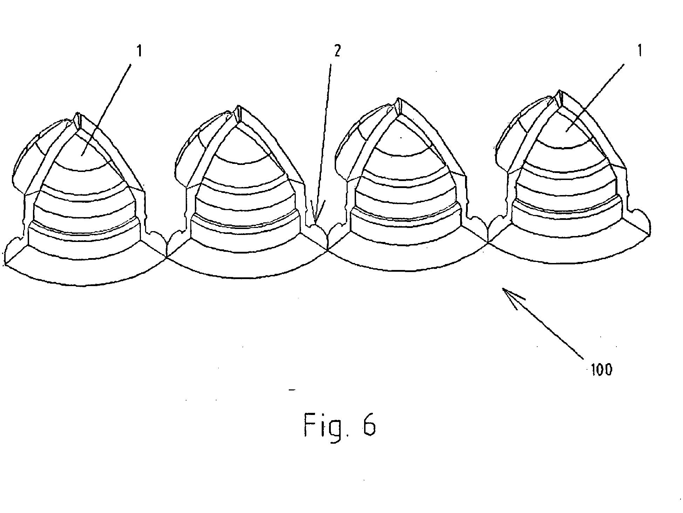

Figur 6 zeigt eine schematische Darstellung eines erfindungsgemässen Ventils 100 mit zusammenhängenden Ventilklappen 1. Vier gleichartige Ventilklappen 1 so im Halsbereich 2 verbunden, dass sie bandartig aneinander hängen und sich so leicht um einen in der Figur nicht gezeigten Adapter legen lassen.

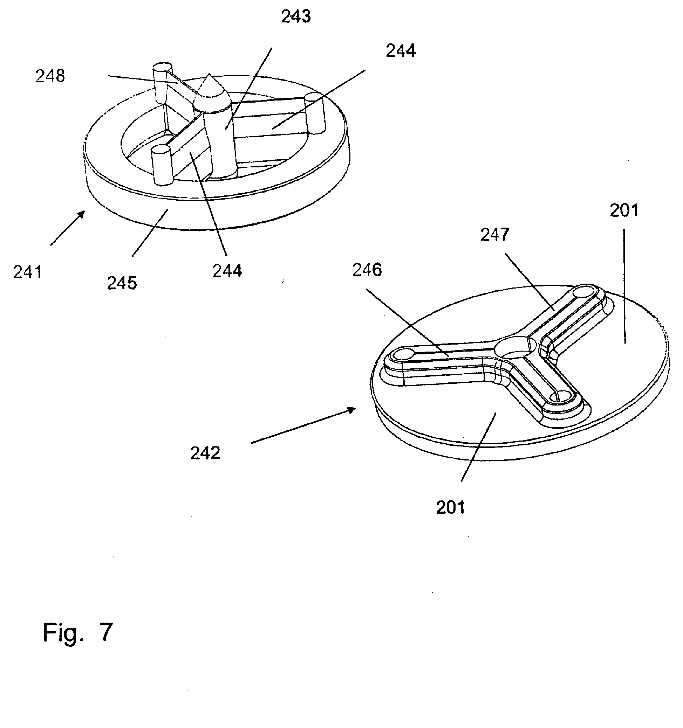

Figur 7 zeigt eine schematische Darstellung von Ventilelementen 241, 242 eines zweiten Beispiels für ein erfindungsgemässes Ventil in perspektivischer Ansicht. Das Ventil besteht aus einem Stützelement 241, auf das eine Membran 242 gelegt wird.

Das Stützelement 241 umfasst einen zentral angeordneten Dorn 243, der mit Haltestegen 244 an einem Halterkranz 245 befestigt ist.

Die Membran 242 besteht bevorzugt aus einem elastischen Material und weist schlitzartige Öffnungen 246 auf, sodass Ventilklappen 201, beispielsweise wie hier drei Klappen, gebildet werden. Die schlitzartigen Öffnungen 246 können direkt im Giess- oder Pressprozess gefertigt werden oder sind geschnitten oder sind gestanzt. Im Bereich der schlitzartigen Öffnungen 246 weist die Membran 242 eine Materialverstärkung 247 auf, wo die Schichtdicke der Membran 242 grösser ist. Die Materialverstärkung 247 verbessert die Abdichtung der Ventilklappen 201 gegenüber den Stegen 244 und dem Dorn 243 und verhindert ein Ausreissen der schlitzartigen Öffnungen.

Im montierten Zustand liegt die Membran 242 auf dem Stützelement 241.

In dem hier gezeigten Beispiel korrespondieren die schlitzartigen Öffnungen 246 der Membran mit den Stegen 244. Dabei stossen die Kanten der Ventilklappen 201, also die verdickten Bereiche an den schlitzartigen Öffnungen 247 an die Stege 244 und den Dorn 243. Die Stege 244 weisen Anlageflächen 248 auf, an welchen die Kanten der Ventilklappen im geschlossenen Zustand anliegen. Dadurch ist ein dichtender Verschluss des Ventils gewährleistet.

Die Ventilöffnung wird versperrt durch die Ventilklappen 201, den Dorn 243 und die Stege 244, wobei nur die Ventilklappen beweglich sind, wenn ein Druck ausgeübt wird.

Die Ventilklappen 201 werden durch den Dorn 243 und die Stege 244 im montierten Zustand auch im geschlossenen Zustand schon etwas auseinandergedrückt, decken also im montierten Zustand eine kleinere Fläche ab als im unmontierten Zustand, sind somit geometrisch überbestimmt. Durch das Auseinanderdrücken erfahren die Ventilklappen 201 eine Vorspannung.

Wird ein Druck ausgeübt, so werden die Ventilklappen 201 von dem Dorn 243 und den Stegen 244 weggedrückt, die Ventilöffnung wird, zumindest teilweise, freigegeben und Masse kann ausströmen.

Der Dorn 243 und die Stege 244 sind bevorzugt so geformt, dass sie von durchfliessender Masse möglichst unter geringem Widerstand und/oder wirbelfrei umströmt werden.

Lässt der Druck nach, so legen sich die Ventilklappen 201 wieder an den Dorn 243 und die Stege 244 an, so dass die Ventilöffnung verschlossen ist und keine Masse mehr nachtropft.

Im geschlossenen Zustand wird der dichte Ventilverschluss durch das Aneinanderstossen eines festen und eines beweglichen Elementes erzeugt, denn die Klappen 201 liegen an einem Steg 244 oder dem Dorn 243 an. Zumindest die feststehenden Elemente erfahren kaum einen Verschleiss, wodurch ein langlebiges Ventil geschaffen wird.

Alternativ könnten statt der geschlitzten Membran 242 auch einzelne Klappen, wie oben beschrieben, um einen Dorn angeordnet sein, sodass der Ventilverschluss durch aneinander stossende Klappenkanten und durch einen Kontakt der Klappenspitzen mit dem Dorn entsteht. Die Haltestege für den Dorn brauchen dann keine Anlagefläche.

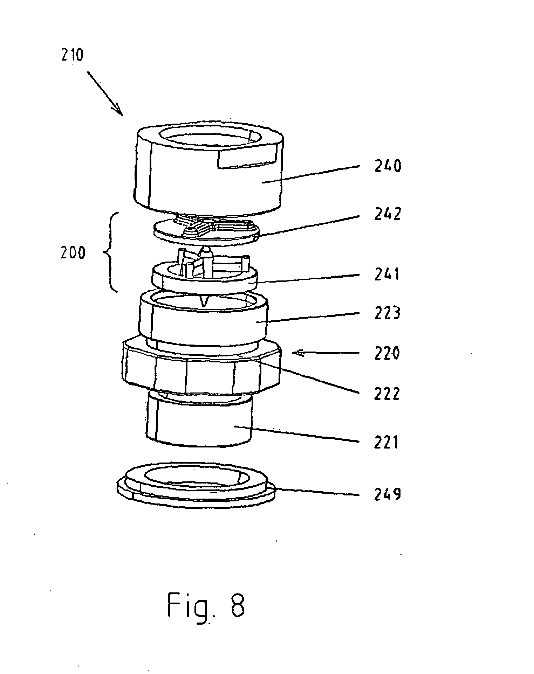

Figur 8 zeigt eine schematische Darstellung der Bestandteile eines zweiten Beispiels für ein Giessmaschinenventilsystem 210 in perspektivischer Ansicht.

Das Ventilsystem 210 umfasst einen Adapter 220, ein Ventil 200, bestehend aus einem Stützelement 241 und einer Membran 242, und ein Befestigungselement 240, das an dem Adapter 220 angeklipst werden kann.

Der Adapter 220 umfasst ausserdem einen zylindrischen Sockel 223, in welchen das Ventil 210 eingelegt werden kann.

Der Befestigung zwischen Adapter 220 und Giessmaschine kann mit einem Dichtring 249 abgedichtet werden.

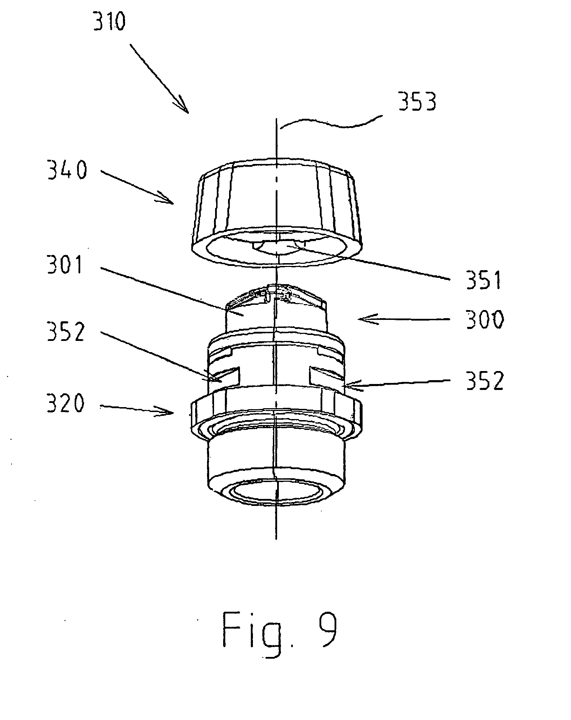

Figur 9 zeigt eine schematische Darstellung der Bestandteile eines zweiten Beispiels für ein Giessmaschinenventilsystem 310 in perspektivischer Ansicht.

Das Ventilsystem 310 umfasst einen Adapter 320, ein Ventil 300, bestehend aus mehreren Ventilklappen 301, und ein Befestigungselement 340, das an dem Adapter 320 angeklipst werden kann.

Das Befestigungselement 340, das beispielsweise aus einem Kunststoff gefertigt, besitzt an seiner Innenseite einen Clip 351, der im montierten Zustand in eine entsprechend Ausnehmungen 352 auf der Aussenseite des Adapters 320, greift. Der Clip 351 und die Ausnehmung 352 sind so ausgeführt, dass das einmal montierte Befestigungselement 340 nicht mehr zerstörungsfrei oder zumindest ohne Werkzeug vom Adapter entfernbar und auch nicht gegen diesen verdrehbar ist. Im vorliegenden Beispiel besitzen die Clips 351 und die Ausnehmungen 352 tangential zur Längsachse 353 des Ventilsystems 310 angeordnete Flächen, die ein Verdrehen des montierten Befestigungselements 340 gegen den Adapter 320 verhindern.

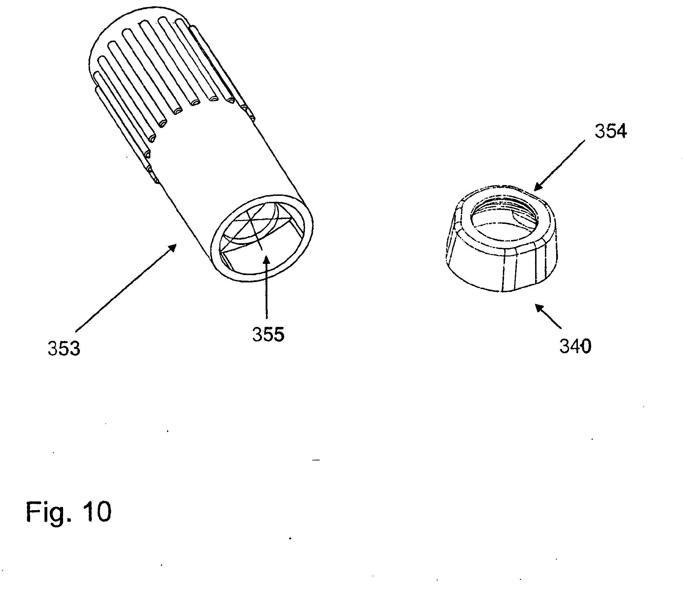

Figur 10 zeigt ein Werkzeug 353 und ein Befestigungselement 340.

Das Befestigungselement 340 besitzt eine profilierte Aussenfläche 354, im gezeigten Beispiel ein Aussenprofil mit dreizähliger Symmetrie, an welches das Werkzeug 353 eingreifen kann. Das Werkzeug 353 weist dazu eine an das Aussenprofil 354 des Befestigungselemenst 340 passende Innenkontur 355 auf. Mit Hilfe des Werkzeuges 353 kann das komplette, zusammengefügte Ventilsystem 310 angesetzt, entnommen, befestigt oder gelöst werden, insbesondere an einer Giessmaschine befestigt oder von dieser gelöst werden kann.

Der Adapter 320 ist beispielsweise aus Aluminium gefertigt und kann an ein entsprechendes Bauteil einer Giessmaschine angeschraubt werden.

## Patentansprüche

1. Ventil, insbesondere für den Einbau in eine Giessmaschine,
wobei das Ventil aus mindestens zwei, bevorzugt gleichartigen, Ventilklappen (1), gebildet ist,
wobei die Ventilklappe (1) mindestens einen Klappenbereich (3) aufweist und bevorzugt einen Halsbereich (2) aufweist, **dadurch gekennzeichnet, dass**
die Ventilklappe (1), insbesondere im Klappenbereich (3), geometrisch überbestimmt ist und/oder
die Ventilklappe (1) mindestens eine Schneidlippe (7) aufweist, bevorzugt im Klappenbereich (3), die im montierten Zustand bei geschlossenem Ventil eine benachbarte Ventilklappe (1) über- oder unterlappt.

2. Ventil gemäss Änspruch 1,
**dadurch gekennzeichnet, dass**
die Ventilklappen (1) an den Randbereichen so ausgeführt sind, dass sie im montierten Zustand dichtend an benachbarte Ventilklappen (1) passen, insbesondere in einem Halsbereich (2) formschlüssig an - und/oder in benachbarte Ventilklappen (1) passen.

3. Ventil gemäss einem der vorhergehenden Ansprüche,
**dadurch gekennzeichnet, dass**
die Kanten (8a, 8b) der Ventilklappe (1), insbesondere in einem Klappenbereich (3), verstärkt sind, insbesondere derart, dass die Biegekraft beim Öffnen der Klappe (1) konstant ist und/oder die Ventilklappe (1) unter Druck auf der gesamten Breite öffnet,
und/oder
der verlauf der Ventilklappenkontur (9), insbesondere in einem Klappenbereich (3), so gestaltet ist, dass die Biegekraft beim öffnen konstant ist und/oder die Ventilklappe (1) unter Druck auf der gesamten Breite öffnet
und/oder
die Ventilklappe (1) derart gestaltet ist, dass eine Masse, welche die montierte Ventilklappe durchströmt, einen Drall erhält.

4. Ventilsystem mit einem Ventil (100) nach einem der Ansprüche 1-3,
dadurch gekenntzeichnet, dass
das Ventilsystem (110; 210; 310) einen Adapter (120; 220; 320) und ein Befestigungselement (140; 240; 340), insbesondere eine Überwurfmutter, ein Klemm- oder Clipelement, aufweist.

5. Ventilsystem nach Anspruch 4,
**dadurch gekennzeichnet, dass**
das System einen Zwischenring (130) aufweist, durch den die Ventilklappen (1) zusammengehalten werden, der insbesondere zwischen den Ventilklappen (1) und dem Befestigungselement (140) angeordnet ist.

6. Ventilsystem nach einem der Ansprüche 4 oder 5,
**dadurch gekennzeichnet, dass**
der Adapter (120; 220) zumindest einen Sockel (123; 223) aus wärmeleitfahigem Material aufweist, um welchen Ventilklappen (1), insbesondere mit einem Halsbereich (2), herum angeordnet sind.

7. Giessmaschine mit einem Ventil nach einem der Ansprüche 1-3 und/oder einem Ventilsystem nach einem der Ansprüche 4-6.

8. Verfahren zum Bilden eines Ventilsystems nach einem der Ansprüche 4-6, umfassend die Schritte
- Anordnen mindestens eines Ventils (100; 200; 300) gemäss einem der Ansprüche 1-3 an einem Adapter (120; 220; 320),
- Fixieren der Anordnung mit einem Befestigungselement (140; 240; 340).

9. Verfahren zum Anpassen eines Ventilsystems gemäss einem der Ansprüche 4-6 an eine zu giessende Masse, umfassend die Schritte
- Lösen des Befestigungselementes (140; 240; 340),
- Entfernen des Ventils (100; 200; 300),
- Auswahl geeigneter Ventilklappen (1; 201),
- Bilden eines Ventilsystems (110; 210; 310) gemäss Anspruch 9.

10. Bausatz zum Bilden eines Ventilsystems gemäss Anspruch 8, umfassend
- einen Adapter (120; 320),
- ein Befestigungselement (140; 340) und
- eine Vielzahl von unterschiedlichen Ventilklappen (1) zum Bilden eines Ventils gemäss einem der Ansprüche 1-3,
sodass aus den Ventilklappen (1; 301) eine Gruppe von Ventilklappen auswählbar ist, die ein Ventil bildet, das passend zu einer vorgegebenen zu giessenden Masse ist.

11. Verfahren zum Umrüsten einer Giessmaschine, umfassend die Schritte
- Entfernen der alten Giessmaschinenventile (100; 200; 300),
- Anbringen von Giessmaschinenventilen (100; 200; 300) nach einem der Ansprüche 1-3 und/oder Anbringen von Giessmaschinenventilsystemen (110; 210; 310) nach einem der Ansprüche 4-6.

12. Ventilsystem nach Anspruch 4,
**dadurch gekennzeichnet, dass**
das Ventilsystem (110; 210; 310) einen Adapter (120; 220; 330) und ein Befestigungselement (140; 240; 340), insbesondere eine Überwurfmutter, ein Klemm- oder Clipelement, zur Aufnahme eines Ventils, nach einem der Ansprüche 1-3, aufweist und an dem Adapter (120; 220; 320) und/oder an dem Befestigungselement (140; 240; 340) eine Verdrehsicherung vorgesehen ist, derart, dass das Befestigungselement (140; 240; 340) nicht mehr gegenüber dem Adapter (120; 220; 320) verdreht werden kann, sobald das Befestigungselement (140; 240; 340) an dem Adapter (120; 220; 30) montiert ist.

13. Verfahren zum Bilden und Anbringen von Ventilsystemen (110; 210; 310), nach einem der Ansprüche 4-6 oder 12, umfassend die Schritte
- Zusammenfügen von Adapter (120; 220; 320) und Befestigungselement (140; 240; 340);
- Befestigen des zusammengefügten Ventilsystems mit Hilfe eines Werkzeuges, das mit der Aussenfläche des Befestigungselement (140; 240; 340) und bevorzugt nicht mit dem Adapter (120; 220; 320) zusammenwirkt.

## Claims

1. Valve, in particular to be installed in a casting machine, wherein the valve is formed from at least two valve flaps (1), preferably of the same kind, wherein the valve flap (1) has at least one flap region (3) and preferably has a neck region (2), **characterized in that**
the valve flap (1) is geometrically overdetermined, in particular in the flap region (3), and/or
the valve flap (1) has at least one cutting lip (7), preferably in the flap region (3), said cutting lip (7) overlapping or underlapping an adjacent valve flap (1) in the mounted state with the valve closed.

2. Valve according to Claim 1,
**characterized in that**
the valve flaps (1) are configured at the peripheral regions such that in the mounted state they fit in a sealing manner onto adjacent valve flaps (1), and in particular in a neck region (2) fit in a form-fitting manner onto and/or into adjacent valve flaps (1).

3. Valve according to either of the preceding claims, **characterized in that**
the edges (8a, 8b) of the valve flap (1) are reinforced, in particular in a flap region (3), in particular such that the bending force during opening of the flap (1) is constant and/or the valve flap (1) opens under pressure on its entire width,
and/or
the profile of the valve flap contour (9), in particular in a flap region (3), is configured such that the bending force during opening is constant and/or the valve flap (1) opens under pressure on its entire width,
and/or
the valve flap (1) is configured such that a swirl is imparted on a mass which flows through the mounted valve flap.

4. Valve system having a valve (100) according to one of Claims 1-3,
**characterized in that**
the valve system (110; 210; 310) has an adapter (120; 220; 320) and a fastening element (140; 240; 340), in particular a union nut, a clamping or clip element.

5. Valve system according to Claim 4,
**characterized in that**
the system has an intermediate ring (130), by way of which the valve flaps (1) are held together and which is arranged in particular between the valve flaps (1) and the fastening element (140).

6. Valve system according to either of Claims 4 and 5,
**characterized in that** the adapter (120; 220) has at least one base (123; 223) made of thermally conductive material, around which valve flaps (1) are arranged, in particular by way of a neck region (2).

7. Casting machine having a valve according to one of Claims 1-3 and/or a valve system according to one of Claims 4-6.

8. Method for forming a valve system according to one of Claims 4-6, comprising the steps of
- arranging at least one valve (100; 200; 300) according to one of Claims 1-3 on an adapter (120; 220; 320),
- fixing the arrangement by way of a fastening element (140; 240; 340).

9. Method for adapting a valve system according to one of Claims 4-6 to a mass to be cast, comprising the steps of
- releasing the fastening element (140; 240; 340),
- removing the valve (100; 200; 300),
- selecting suitable valve flaps (1; 201),
- forming a valve system (110; 210; 310) according to Claim 9.

10. Construction kit for forming a valve system according to Claim 8, comprising
- an adapter (120; 320),
- a fastening element (140; 340) and
- a multiplicity of different valve flaps (1) for forming a valve according to one of Claims 1-3, such that it is possible to select from the valve flaps (1; 301) a group of valve flaps which forms a valve which matches a predetermined mass to be cast.

11. Method for retrofitting a casting machine, comprising the steps of
- removing the old casting machine valves (100; 200; 300),
- attaching casting machine valves (100; 200; 300) according to one of Claims 1-3 and/or attaching casting machine valve systems (110; 210; 310) according to one of Claims 4-6.

12. Valve system according to Claim 4,
**characterized in that**
the valve system (110; 210; 310) has an adapter (120; 220; 320) and a fastening element (140; 240; 340), in particular a union nut, clamping or clip element, for holding a valve according to one of Claims 1-3, and a rotation-prevention means is provided on the adapter (120; 220; 320) and/or on the fastening element (140; 240; 340) such that the fastening element (140; 240; 340) can no longer be rotated with respect to the adapter (120; 220; 320) as soon as the fastening element (140; 240; 340) has been mounted on the adapter (120; 220; 320).

13. Method for forming and attaching valve systems (110 ; 210; 310) according to one of Claims 4-6 or 12, comprising the steps of
- assembling the adapter (120; 220; 320) and fastening element (140; 240; 340),
- fastening the assembled valve system with the aid of a tool which interacts with the external surface of the fastening element (140; 240; 340) and preferably not with the adapter (120; 220; 320).

## Revendications

1. Soupape, notamment à insérer dans une machine de coulée, la soupape se composant d'au moins deux clapets de soupape (1), de préférence de même type ;
le clapet de soupape (1) comportant au moins une zone de clapet (3) et comportant de façon préférée une zone de col (2) ;
**caractérisée en ce que** :
le clapet de soupape (1) est surdéterminé sur le plan géométrique, notamment dans la zone de clapet (3) ;
et/ou
le clapet de soupape (1) comporte au moins une lèvre tranchante (7) située de préférence dans la zone de clapet (3) et chevauchant par en haut ou par en bas un clapet de soupape (1) fermé à l'état monté.

2. Soupape selon la revendication 1, **caractérisée en ce que** les clapets de soupape (1) sont réalisés de telle sorte au niveau des zones de bordure qu'ils s'adaptent par complémentarité de formes contre et/ou dans les clapets de soupape (1) voisins, à l'état monté, de façon étanche, par rapport aux clapets de soupape (1) voisins, notamment dans une zone de col (2).

3. Soupape selon l'une quelconque des revendications précédentes, **caractérisée en ce que** les bords (8a, 8b) du clapet de soupape (1) sont renforcés, notamment dans une zone de clapet (3), notamment de telle sorte que la force de flexion s'exerçant lors de l'ouverture du clapet (1) est constante et/ou que le clapet de soupape (1) s'ouvre sous l'effet de la pression exercée sur l'ensemble de sa largeur ; et/ou la courbe du contour de clapet de soupape (9), notamment dans une zone de clapet (3), est conçue de telle sorte que la force de flexion est constante lors de l'ouverture et/ou que le clapet de soupape (1) s'ouvre sous l'effet de la pression exercée sur l'ensemble de sa largeur ; et/ou
le clapet de soupape (1) est conçu de telle sorte qu'une masse traversant le clapet de soupape monté se dote d'un mouvement cinétique.

4. Système de soupape doté d'une soupape (100) selon l'une quelconque des revendications 1 à 3, **caractérisé en ce que** le système de soupape (110 ; 210 ; 310) comporte un adaptateur (120 ; 220 ; 320) et un élément de fixation (140 ; 240 ; 340), notamment un écrou scapulaire, un élément de serrage ou de clipsage.

5. Système de soupape selon la revendication 4, **caractérisé en ce que** le système comporte une bague intermédiaire (130) à travers laquelle les clapets de soupape (1) sont maintenus ensemble et disposée notamment entre les clapets de soupape (1) et l'élément de fixation (140).

6. Système de soupape selon l'une quelconque des revendications 4 ou 5, **caractérisé en ce que** l'adaptateur (120 ; 220) comporte au moins une base (123 ; 223) en matériau thermoconducteur autour de laquelle sont disposés des clapets de soupape (1), notamment avec leur zone de col (2).

7. Machine de coulée pourvue d'une soupape selon l'une quelconque des revendications 1 à 3 et/ou d'un système de soupape selon l'une quelconque des revendications 4 à 6.

8. Procédé de formation d'un système de soupape selon l'une quelconque des revendications 4 à 6, comprenant les étapes suivantes :
- agencement d'au moins une soupape (100 ; 200 ; 300) selon l'une quelconque des revendications 1-3 au niveau d'un adaptateur (120 ; 220 ; 320) ;
- fixation de l'agencement à l'aide d'un élément de fixation (140 ; 240 ; 340).

9. Procédé d'adaptation d'un système de soupape selon l'une quelconque des revendications 4 à 6 à une masse à couler, comprenant les étapes suivantes :
- desserrement de l'élément de fixation (140 ; 240 ; 340) ;
- retrait de la soupape (100 ; 200 ; 300) ;
- sélection des clapets de soupape (1 ; 201) adaptés ;
- formation d'un système de soupape (110 ; 210 ; 310) selon la revendication 9.

10. Jeu de formation d'un système de soupape selon la revendication 8, comprenant :
- un adaptateur (120 ; 320) ;
- un élément de fixation (140 ; 340) ; et
- une pluralité de clapets de soupape (1) différents permettant de former une soupape selon l'une quelconque des revendications 1 à 3 ;
de sorte qu'un groupe de clapets de soupape peut être sélectionné à partir des clapets de soupape (1 ; 301), ledit groupe formant une soupape adaptée à une masse prédéfinie à couler.

11. Procédé de transformation d'une machine de coulée, comprenant les étapes suivantes :
- retrait des anciennes soupapes de machine coulée (100 ; 200 ; 300) ;
- mise en place des soupapes de machine de coulée (100 ; 200 ; 300) selon l'une quelconque des revendications 1 à 3 et/ou mise en place des systèmes de soupape de machine de coulée (110 ; 210 ; 310) selon l'une quelconque des revendications 4 à 6.

12. Système de soupape selon la revendication 4, **caractérisé en ce que** le système de soupape (110 ; 210 ; 310) comprend un adaptateur (120 ; 220 ; 320) et un élément de fixation (140 ; 240 ; 340), notamment un écrou scapulaire, un élément de serrage ou de clipsage, permettant de recevoir une soupape, selon l'une quelconque des revendications 1 à 3, et une fixation antitorsion étant prévue au niveau de l'adaptateur (120 ; 220 ; 330) et/ou au niveau de l'élément de fixation (140 ; 240 ; 340), de telle sorte que l'élément de fixation (140 ; 240 ; 340) ne peut plus être vrillé par rapport à l'adaptateur (120 ; 220 ; 330) dans la mesure où l'élément de fixation (140 ; 240 ; 340) est monté sur l'adaptateur (120 ; 220 ; 330) .

13. Procédé de formation et de mise en place d'un système de soupapes (110 ; 210 ; 310), selon l'une quelconque des revendications 4 à 6 ou 12, comprenant les étapes suivantes :
- assemblage de l'adaptateur (120 ; 220 ; 320) et de l'élément de fixation (140 ; 240 ; 340) ;
- fixation du système de soupape assemblé à l'aide d'un outil entrant en interaction avec la surface extérieure de l'élément de fixation (140 ; 240 ; 340) sans interaction de façon préférée avec l'adaptateur (120 ; 220 ; 320).
